# EUROPÄISCHE PATENTSCHRIFT

(11) **EP 1 943 133 B1**
(45) Veröffentlichungstag und Bekanntmachung des Hinweises auf die Patenterteilung: **31.12.2008**
(21) Anmeldenummer: 06792015.7
(22) Anmeldetag: 13.09.2006
(51) Int. Cl.: B60T 10/02

(54) **HYDRODYNAMISCHE BREMSE**
HYDRODYNAMIC BRAKE
FREIN HYDRODANMIQUE

(30) Priorität: 04.10.2005 DE 102005047519
(43) Veröffentlichungstag der Anmeldung: 16.07.2008
(73) Patentinhaber: Voith Turbo GmbH & Co. KG, 89522 Heidenheim (DE)
(72) Erfinder: LAUKEMANN, Dieter, 74541 Vellberg (DE); ADAMS, Werner, 74564 Crailsheim (DE)
(74) Vertreter: Dr. Weitzel & Partner
(86) Internationale Anmeldenummer: PCT/EP2006/008896
(87) Internationale Veröffentlichungsnummer: WO 2007/039050

(56) Entgegenhaltungen:
- DE-A1- 19 646 597
- DE-A1- 19 927 397
- DE-A1-6102004 016 29
- FR-A1- 2 673 900

## Beschreibung

Die Erfindung betrifft eine hydrodynamische Bremse, auch Retarder genannt. Insbesondere betrifft die vorliegende Erfindung einen Retarder, dessen Rotorwelle durch zwei Kegelrollenlager getragen wird.

Hydrodynamische Bremsen sind in einer Vielzahl von Ausführungen bekannt. Sie weisen einen Stator mit einem Statorschaufelrad und einen Rotor mit einem Rotorschaufelrad auf, wobei sich das Rotorschaufelrad und das Statorschaufelrad axial derart gegenüberstehen, dass sie einen in der Regel torusförmigen Arbeitsraum miteinander ausbilden, der mit einem Arbeitsmedium befüllbar ist, um Antriebsleistung beziehungsweise Drehmoment vom Rotor auf den Stator zu übertragen und somit den Rotor abzubremsen.

Der Rotor wird durch eine Rotorwelle getragen. Häufig trägt die Rotorwelle zugleich ein Antriebsritzel, mittels welchem das Rotorschaufelrad in einer Drehbewegung antreibbar ist. Die Rotorwelle wird häufig durch zwei Kegelrollenlager gelagert.

Die Einstellung der Kegelrollenlager erfolgt herkömmlich durch Distanzscheiben. Eine solche Einstellung ist vergleichsweise aufwendig. Die im Betrieb der hydrodynamischen Bremse auftretenden hohen Temperaturen, insbesondere beim Bremsen, bewirken eine Vergrößerung des Lagerspiels von solchen mit Distanzscheiben eingestellten Kegelrollenlagern. Ein zu großes Lagerspiel verkürzt die Lebensdauer der Lagerung und bewirkt eine Schiefstellung der Rotorwelle, was wiederum zu einem erhöhten Verschleiß der Ritzelverzahnung, über welche das Rotorschaufelrad angetrieben wird, führen kann.

Das Dokument DE 196 46 597 A1 zeigt eine hydrodynamische Bremse, deren Rotorwelle durch zwei Kegelrollenlager getragen wird. Mittels einer Druckfeder wird auf den Rotor eine diesen vom Stator abfahrende Vorspannkraft ausgeübt, wobei der Rotor axial auf der Rotorwelle gleitet. Die aus diesem Dokument bekannten Merkmale sind im Oberbegriff von Anspruch 1 zusammengefasst.

Das Dokument DE 10 2004 016 296 A1 beschreibt ein in Axialrichtung vorgespanntes Axiallager einer hydrodynamischen Baueinheit, wobei die Vorspannung ein Auseinanderfahren der beiden Schaufelräder bewirkt.

Der Erfindung liegt die Aufgabe zugrunde, eine hydrodynamische Bremse mit einer solchen Lagerung darzustellen, welche gegenüber dem Stand der Technik verbessert ist, und bei welcher insbesondere die oben genannten Probleme nicht auftreten.

Die erfindungsgemäße Aufgabe wird durch eine hydrodynamische Bremse mit den Merkmalen von Anspruch 1 gelöst. Die abhängigen Ansprüche beschreiben vorteilhafte und besonders zweckmäßige Ausgestaltungen der Erfindung.

Die erfindungsgemäße hydrodynamische Bremse weist einen Rotor mit einem Rotorschaufelrad und einen Stator mit einem Statorschaufelrad auf, welche - wie bekannt - derart axial nebeneinander angeordnet sind, dass sie einen Arbeitsraum, insbesondere torusförmigen Arbeitsraum, miteinander ausbilden, welcher mit einem Arbeitsmedium zur Übertragung von Antriebsleistung von dem Rotor auf den Stator befüllbar ist.

Das Rotorschaufelrad wird durch eine Rotorwelle getragen, wobei die Rotorwelle gemäß einer Ausführung der Erfindung zugleich ein Antriebsritzel trägt, über welches die Rotorwelle und damit das Rotorschaufelrad antreibbar ist, so dass das Rotorschaufelrad eine Drehbewegung ausführt. Das Rotorschaufelrad und/oder das Antriebsritzel können integral mit der Rotorwelle ausgebildet sein, oder an dieser, insbesondere lösbar, montiert sein.

Erfindungsgemäß umfasst die Lagerung der Rotorwelle wenigstens zwei oder genau zwei Wälzlager, welche sich hinsichtlich der durch sie aufnehmbaren Axialkraft, die durch die Rotorwelle auf sie ausgeübt wird, unterscheiden. So ist ein erstes Wälzlager vorgesehen, das eine vorbestimmte erste Axialkraft aufnehmen kann, und ein zweites Wälzlager, das axial seitlich von dem ersten Wälzlager angeordnet ist und eine zweite vorgegebene Axialkraft aufnehmen kann, die größer als die vorgegebene erste Axialkraft ist. Das zweite Lager ist damit vorteilhaft größer als das erste Lager ausgeführt, das heißt seine Wälzkörper und/oder sein Außenring weisen/weist einen größeren Durchmesser auf.

Dabei sind die beiden Lager axial in einer solchen Reihenfolge nebeneinander angeordnet, dass das größere der beiden Lager beziehungsweise jenes Lager, das die vergleichsweise größere Axialkraft aufnehmen kann, hinsichtlich des kleineren Lagers beziehungsweise des Lagers, das die kleinere Axialkraft aufnehmen kann, auf derselben Axialseite liegt, wie das Statorschaufelrad gegenüber dem Rotorschaufelrad. Hierdurch wird folgendes erreicht:

Im Bremsbetrieb erfährt das Rotorschaufelrad eine Axialkraft, welche in Richtung von dem Rotorschaufelrad auf das Statorschaufelrad verläuft. Somit erfährt auch die Rotorwelle eine gleichgerichtete Axialkraft, da das Rotorschaufelrad in Axialrichtung auf der Rotorwelle fixiert ist. Diese Axialkraft aus dem Rotorschaufelrad soll jenes Lager aufnehmen, welches für die vergleichsweise größere Axialkraft ausgelegt ist.

Gleichzeitig kann das Antriebsritzel mit einer Schrägverzahnung ausgeführt sein, welche in einer solchen Richtung schräg verläuft, dass eine Axialkraft, welche beim Antrieb des Antriebsritzels mittels einem Zahnrad, das mit der Schrägverzahnung kämmt, auf das Antriebsritzel und damit die Rotorwelle ausgeübt wird, mit der soeben beschriebenen Axialkraft von dem Rotorschaufelrad in Richtung des Statorschaufelrades gleichgerichtet ist. Somit nimmt das für eine größere Axialkraft dimensionierte Lager auch die Axialkraft aus der Antriebsverzahnung auf.

Zusätzlich kann eine Vorspanneinrichtung vorgesehen sein, zum Beispiel in Form einer Feder, vorteilhaft in Form einer Tellerfeder, wobei die letztere insbesondere über ihrem Federweg eine konstante oder im wesentlichen konstante Kraft aufweist, die eine elastische Kraft in derselben Richtung wie die zuvor beschriebenen beiden Axialkräfte auf die Rotorwelle ausübt. Insbesondere übt die Vorspanneinrichtung, vorteilhaft eine Tellerfeder, die unmittelbar neben dem ersten Lager angeordnet beziehungsweise in dieses integriert ist, eine Axialkraft auf den Außenring dieses Lagers auf, wenn die Rotorwelle auf ihrem äußeren Umfang durch die beiden Lager gelagert wird, beispielsweise beidseitig von dem Antriebsritzel. Natürlich kann die Vorspanneinrichtung andere Angriffspunkte an der Welle beziehungsweise dem Lager oder dem Retardergehäuse aufweisen, beispielsweise kann sie am Innenring des Lagers angreifen.

Die Vorspannung, welche die Vorspanneinrichtung auf die Rotorwelle ausübt, ist insbesondere so groß, dass die Gesamtschubkraft auf die Rotorwelle in allen Betriebszuständen der hydrodynamischen Bremse in dieselbe Richtung verläuft.

Insbesondere bei einer hydrodynamischen Bremse, bei der in bestimmten Betriebszuständen, beispielsweise bei niedrigen Drehzahlen, eine Axialrichtungsumkehr in der Kraft, die aus dem hydrodynamischen Kreislauf im Arbeitsraum der hydrodynamischen Bremse auf die Rotorwelle wirkt, eintritt, wird vorteilhaft eine Vorspannungskraft gewählt, die größer ist als eine resultierende Kraft aus der maximalen umgekehrten Axialkraft aus dem hydrodynamischen Kreislauf und aus der Axialkraft der Schrägverzahnung, wenn diese resultierende Kraft in der entgegengesetzten Richtung wie die Axialkraft aus der Vorspanneinrichtung wirkt.

Die beiden Lager sind vorteilhaft als Kegelrollenlager oder allgemein als Schräglager ausgeführt, wobei die Schrägstellung der Wälzebenen derart entgegengesetzt zueinander ist, dass die beiden Lager jeweils eine entgegengesetzt gerichtete Axialkraft aufnehmen können. Das heißt, das erste Lager nimmt eine Axialkraft in einer Richtung entgegengesetzt zu der Axialkraft auf, die im Bremsbetrieb in Richtung von dem Rotor auf den Stator entsteht. Das zweite Lager, das heißt das für eine größere Axialkraft dimensionierte Lager, nimmt hingegen eine Axialkraft auf, die der Axialkraft des ersten Lagers entgegengesetzt ist und in Richtung der beschriebenen Axialkraft vom Rotor in Richtung des Stators verläuft.

Unter Schräglager sind alle solchen Lager zu verstehen, die aufgrund einer konusförmigen Ausführung der Wälzkörper beziehungsweise aufgrund der gegenüber der Axialrichtung Schrägstellung von einer oder von beiden Laufbahnen in der Lage sind, eine kombinierte Axial-Radial-Kraft aufzunehmen.

Unter Wälzebene ist die Ebene der schräggestellten Laufbahn(en) zu verstehen, beziehungsweise bei schräg gestellten Wälzkörpern, beispielsweise Zylindern, auch die Ebene, in der die Rotationsachse der Wälzkörper verläuft.

Die Erfindung soll nachfolgend anhand der Figur exemplarisch erläutert werden.

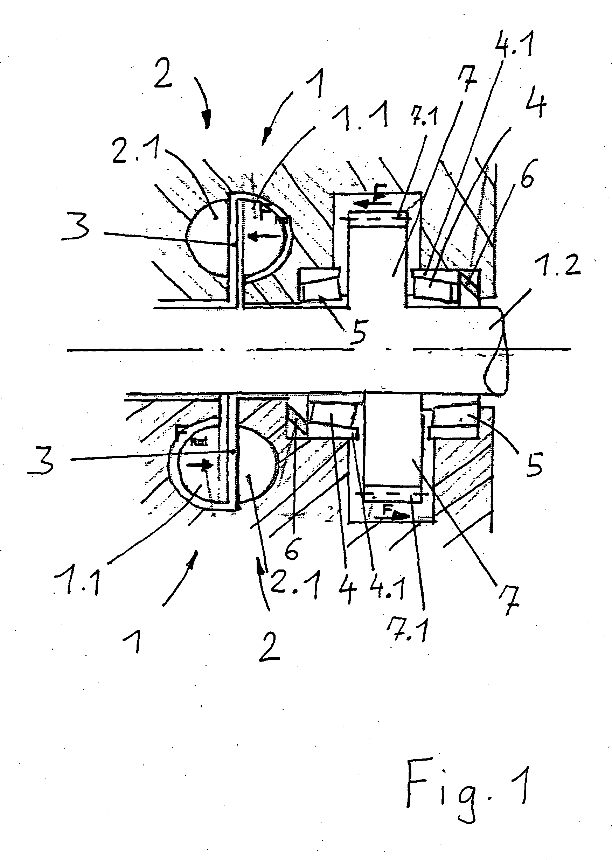

In der Figur 1 erkennt man einen Axialschnitt durch eine hydrodynamische Bremse mit einem Rotor 1 und einem Stator 2. Dabei ist oberhalb der Drehachse der Rotorwelle 1.2, welche das Rotorschaufelrad 1.1 und das Antriebsritzel 7 trägt, eine erste Ausführungsform der Erfindung gezeigt, und unterhalb der Drehachse der Rotorwelle 1.2 eine zweite Ausführungsform.

Gemäß der ersten Ausführungsform ist das Rotorschaufelrad 1.1 in Axialrichtung rechts von dem Statorschaufelrad 2.1 angeordnet, so dass beide Schaufelräder 1.1, 2.1 den gezeigten torusförmigen Arbeitsraum 3 ausbilden. Rechts von dem Arbeitsraum 3 ist auf der Rotorwelle 1.2 das Antriebsritzel 7 mit der Schrägverzahnung 7.1 angeordnet. Die Rotorwelle 1.2 wird beidseitig, insbesondere ausschließlich, von dem Antriebsritzel 7 durch jeweils ein Wälzlager 4, 5 in Form eines Kegelrollenlagers getragen.

Wie man sieht, ist die Kraft F, die in Axialrichtung auf die Rotorwelle 1.2 beim Antrieb des Ritzels 7 und der Schrägverzahnung 7.1 ausgeübt wird, in dieselbe Richtung gerichtet, wie die Kraft F_{Rot}, die vom Rotorschaufelrad 1.1 in Richtung des Statorschaufelrad 2.1 aufgrund der hydrodynamischen Kräfte im Bremsbetrieb der hydrodynamischen Bremse auftritt und auf die Rotorwelle 1.2 wirkt.

Dementsprechend ist das zweite Wälzlager 5, welches im Vergleich zu dem ersten Wälzlager 4 eine größere Axialkraft aufnehmen kann, bei der ersten gezeigten Ausführungsform axial links von dem ersten Wälzlager 4 angeordnet, das heißt vorliegend auf der linken Seite des Antriebsritzels 7, wohingegen das erste Lager 4 auf der rechten Seite des Antriebsritzels 7 angeordnet ist.

Unmittelbar neben dem ersten Lager 4 ist eine Tellerfeder 6 vorgesehen, welche eine Druckkraft in Richtung von dem Rotorschaufelrad 1.1 zu dem Statorschaufelrad 2.1 auf den äußeren Lagerring 4.1 des ersten Lagers 4 ausübt. Die Tellerfeder 6 ist dabei zwischen das feststehende Gehäuse der hydrodynamischen Bremse und den stationären äußeren Lagerring 4.1 geschaltet, so dass es die beiden genannten Bauteile auseinander drückt.

Die Vorspannung, welche mittels der Tellerfeder 6 auf das erste Lager 4 ausgeübt wird, ist ausreichend klein gehalten, so dass das Lager 4 vergleichsweise klein dimensioniert werden kann. Durch die Axialkraft der Vorspanneinrichtung, hier der Tellerfeder 6, kann das Lagerspiel eingestellt werden.

In der zweiten in der Figur 1 gezeigten Ausführung sind das Rotorschaufelrad 1.1 und das Statorschaufelrad 2.1 sowie das erste Lager 4 und das zweite Lager 5 hinsichtlich ihrer axialen Reihenfolge von links nach rechts vertauscht. Das heißt, das Rotorschaufelrad 1.1 ist links von dem Statorschaufelrad 2.1 und das erste Lager 4 links von dem zweiten Lager 5 angeordnet. Zugleich ist die Richtung der Schrägstellung der Schrägverzahnung 7.1 des Antriebsritzels 7 gegenüber der ersten gezeigten Ausführung umgedreht, so dass die Axialkraft aus dem Rotorschaufelrad 1.1 und die Axialkraft aus der Schrägverzahnung 7.1 auf die Rotorwelle 1.2 entgegengesetzt zu jenen Kräften aus der ersten Ausführung verlaufen. Entsprechend ist auch die Vorspanneinrichtung, hier die Tellerfeder 6, auf der anderen Seite des ersten Lagers 4 positioniert, so dass sie eine Axialkraft entsprechend der Richtung der Kraft aus dem Rotorschaufelrad 1.1 und der Schrägverzahnung 7.1 auf den Außenring 4.1 des Lagers 4 ausübt.

## Patentansprüche

1. Hydrodynamische Bremse
1.1 mit einem Rotor (1), umfassend ein Rotorschaufelrad (1.1);
1.2 mit einem Stator (2), umfassend ein Statorschaufelrad (2.1);
1.3 das Rotorschaufelrad (1.1) und das Statorschaufelrad (2.1) bilden miteinander einen Arbeitsraum (3) aus, der mit einem Arbeitsmedium zur Übertragung von Antriebsleistung vom Rotor (1) auf den Stator (2) befüllbar ist;
1.4 der Rotor (1) weist eine Rotorwelle (1.2) auf, die das Rotorschaufelrad (1.1) trägt und welche mittels einer Lagerung, die wenigstens zwei oder genau zwei Wälzlager (4, 5) umfasst, drehbar gelagert ist;
1.5 die Lagerung der Rotorwelle (1.2) umfasst ein erstes Wälzlager (4), das eine vorbestimmte erste Axialkraft aufnehmen kann, und ferner ein axial seitlich zu dem ersten Wälzlager (4) angeordnetes zweites Wälzlager (5), das eine vorbestimmte zweite Axialkraft aufnehmen kann, wobei die zweite Axialkraft größer als die erste Axialkraft ist; und
1.6 das Rotorschaufelrad (1.1) ist seitlich gegenüber dem Statorschaufelrad (2.1) auf derselben axialen Seite angeordnet, wie das erste Wälzlager (4) gegenüber dem zweiten Wälzlager (5), so dass eine Axialkraft vom Rotorschaufelrad (1.1) in Richtung des Statorschaufelrades (2.1) durch das zweite Wälzlager (5) aufgenommen wird;
**gekennzeichnet durch** die folgenden Merkmale:
1.7 das Rotorschaufelrad (1.1) ist in Axialrichtung auf der Rotorwelle (1.2) fixiert;
1.8 es ist eine Vorspanneinrichtung vorgesehen, welche eine elastische Kraft in einer Axialrichtung vom Rotorschaufelrad (1.1) in Richtung des Statorschaufelrades (2.1) auf die Rotorwelle (1.2) aufbringt.

2. Hydrodynamische Bremse gemäß Anspruch 1, **dadurch gekennzeichnet, dass** die Vorspanneinrichtung, die insbesondere in Form einer Feder oder einer Tellerfeder (6) vorgesehen ist, eine solche Vorspannkraft aufweist, dass sie eine Vorspannung auf die Rotorwelle (1.2) ausübt, die so groß ist, dass die Gesamtschubkraft auf die Rotorwelle (1.2) in allen Betriebszuständen der hydrodynamischen Bremse in Richtung vom Rotorschaufelrad (1.1) auf das Statorschaufelrad (2.1) verläuft.

3. Hydrodynamische Bremse gemäß einem der Ansprüche 1 oder 2, **dadurch gekennzeichnet, dass** das erste Wälzlager (4) und das zweite Wälzlager (5) jeweils als Kegelrollenlager oder als Schräglager ausgeführt sind, wobei die Schrägstellung der Wälzebenen derart entgegengesetzt zueinander ist, dass die beiden Lager (4, 5) jeweils eine entgegengesetzt gerichtete Axialkraft aufnehmen können.

4. Hydrodynamische Bremse gemäß einem der Ansprüche 1 bis 3, **dadurch gekennzeichnet, dass** die Rotorwelle (1.2) ein Antriebsritzel (7) trägt, über welches die Rotorwelle (1.2) und damit das Rotorschaufelrad (1.1) antreibbar ist, wobei das Antriebsritzel (7) eine Schrägverzahnung (7.1) aufweist, die beim Antrieb des Antriebsritzels (7.1) mittels eines mit der Schrägverzahnung (7.1) kämmenden Zahnrades eine Axialkraft in Richtung von dem Rotorschaufelrad (1.1) auf das Statorschaufelrad (2.1) erzeugt.

5. Hydrodynamische Bremse gemäß einem der Ansprüche 3 oder 4, **dadurch gekennzeichnet, dass** unmittelbar neben dem ersten Lager (4) eine Tellerfeder (6) angeordnet oder in dem Lager (4) integriert ist, welche eine elastische Kraft in Axialrichtung vom Rotorschaufelrad (1.1) auf das Statorschaufelrad (2.1) auf einen Außenring (4.1) des ersten Lagers (4) aufbringt.

## Claims

1. A hydrodynamic brake
1.1 with a rotor (1) comprising a rotor blade wheel (1.1);
1.2 with a stator (2) comprising a stator blade wheel (2.1);
1.3 the rotor blade wheel (1.1) and the stator blade wheel (2.1) together form a working chamber (3) which can be filled with a working medium for transferring drive power from the rotor (1) to the stator (2);
1.4 the rotor (1) comprises a rotor shaft (1.2) which carries the rotor blade wheel (1.1) and which is rotatably held by means of a bearing which comprises at least two or precisely two roller bearings (4, 5);
1.5 the bearing of the rotor shaft (1.2) comprises a first roller bearing (4) which can take up a predetermined first axial force, and further a second roller bearing (5) which is arranged axially laterally to the first roller bearing (4) and which can take up a predetermined second axial force, with the second axial force being larger than the first axial force, and
1.6 the rotor blade wheel (1.1) is arranged laterally opposite the stator blade wheel (2.1) on the same axial side as the first roller bearing (4) opposite of the second roller bearing (5), so that an axial force from the rotor blade wheel (1.1) in the direction of the stator blade wheel (2.1) is taken up by the second roller bearing (5), **characterized by** the following features:
1.7 the rotor blade wheel (1.1) is fixed in the axial direction on the rotor shaft (1.2);
1.8 a pretensioning device is provided which applies an elastic force on the rotor shaft (1.2) in an axial direction from the rotor blade wheel (1.1) in the direction of the stator blade wheel (2.1).

2. A hydrodynamic brake according to claim 1, **characterized in that** the pretensioning device, which is provided especially in the form of a spring or disk spring (6), has such a pretensioning force that it exerts a pretension on the rotor shaft (1.2) which is so large that the total shearing force on the rotor shaft (1.2) in all operational states of the hydrodynamic brake extends in the direction from the rotor blade wheel (1.1) to the stator blade wheel (2.1).

3. A hydrodynamic brake according to one of the claims 1 or 2, **characterized in that** the first roller bearing (4) and the second roller bearing (5) are each arranged as tapered roller bearings or as angular contact bearings, with the inclined position of the roller planes being opposite of each other in such a way that the two bearings (4, 5) each can receive an oppositely directed axial force.

4. A hydrodynamic brake according to one of the claims 1 to 3, **characterized in that** the rotor shaft (1.2) carries a drive pinion (7) through which the rotor shaft (1.2) and thus the rotor blade wheel (1.1) is drivable, with the drive pinion (7) comprising an oblique toothing (7.1) which generates an axial force in the direction from the rotor blade wheel (1.1) to the stator blade wheel (2.1) during the drive of the drive pinion (7.1) by means of a gearwheel combing with the helical gearing.

5. A hydrodynamic brake according to one of the claims 3 or 4, **characterized in that** a disk spring (6) is arranged directly adjacent to the first bearing (4) or is integrated in said bearing (4), which spring exerts an elastic force in the axial direction from the rotor blade wheel (1.1) on the stator blade wheel (2.1) on an outer ring (4.1) of the first bearing (4).

## Revendications

1. Frein hydrodynamique
1.1 avec un rotor (1) comprenant une roue à aubes de rotor (1.1) ;
1.2 avec un stator (2) comprenant une roue à aubes de stator (2.1) ;
1.3 la roue à aubes de rotor (1.1) et la roue à aubes de stator (2.1) forment ensemble un espace de travail (3) qui peut être rempli d'un fluide de travail pour transmettre la puissance d'entraînement du rotor (1) au stator (2) ;
1.4 le rotor (1) présente un arbre de rotor (1.2) qui porte la roue à aubes de rotor (1.1) et qui est supporté avec possibilité de rotation au moyen d'un appui comprenant au moins deux ou précisément deux roulements à rouleaux (4, 5) ;
1.5 l'appui de l'arbre du rotor (1.2) comprend un premier roulement à rouleaux (4), qui peut absorber une première force axiale prédéterminée, et également un deuxième roulement à rouleaux (5) situé latéralement dans le sens axial par rapport au premier roulement à rouleaux (4), qui peut absorber une deuxième force axiale prédéterminée, la deuxième force axiale étant plus grande que la première force axiale, et
1.6 la roue à aubes de rotor (1.1) est disposée latéralement par rapport à la roue à aubes de stator (2.1) sur le côté axial de celle-ci, comme le premier roulement à rouleaux (4) par rapport au deuxième roulement à rouleaux (5), de sorte qu'une force axiale dirigée de la roue à aubes de rotor (1.1) vers la roue à aubes de stator (2.1) est absorbée par le deuxième roulement à rouleaux (5) ;
**caractérisé en ce que** :
1.7 la roue à aubes de rotor (1.1) est fixée dans le sens axial sur l'arbre du rotor (1.2) ;
1.8 il est prévu un dispositif de précontrainte qui exerce une force élastique dans le sens axial sur l'arbre du rotor (1.2) dans une direction allant de la roue à aubes de rotor (1.1) vers la roue à aubes de stator (2.1).

2. Frein hydrodynamique selon la revendication 1, **caractérisé en ce que** le dispositif de précontrainte, qui est prévu en particulier sous la forme d'un ressort ou d'une rondelle-ressort (6), possède une force de précontrainte telle qu'il exerce une précontrainte sur l'arbre du rotor (1.2) suffisamment grande pour que la force de poussée totale sur l'arbre du rotor (1.2) dans tous les états de fonctionnement du frein hydrodynamique soit orientée dans une direction allant de la roue à aubes de rotor (1.1) vers la roue à aubes de stator (2.1).

3. Frein hydrodynamique selon l'une des revendications 1 ou 2, **caractérisé en ce que** le premier roulement à rouleaux (4) et le deuxième roulement à rouleaux (5) sont réalisés chacun comme un roulement à rouleaux coniques ou un roulement oblique, l'obliquité des plans de roulement étant opposée de telle manière que les deux roulements (4, 5) puissent absorber des forces axiales de directions opposées.

4. Frein hydrodynamique selon l'une des revendications 1 à 3, **caractérisé en ce que** l'arbre du rotor (1.2) porte un pignon d'entraînement (7) qui peut entraîner l'arbre du rotor (1.2) et ainsi la roue à aubes de rotor (1.1), lequel pignon d'entraînement (7) présente une denture oblique (7.1) qui produit lors de l'entraînement du pignon d'entraînement (7.1), au moyen d'une roue dentée engrenant avec la denture oblique (7.1) une force axiale orientée dans la direction allant de la roue à aubes de rotor (1.1) vers la roue à aubes de stator (2.1).

5. Frein hydrodynamique selon l'une des revendications 3 ou 4, **caractérisé en ce qu'**immédiatement à côté du premier roulement (4), une rondelle-ressort (6) est disposée ou intégrée dans le roulement (4) et exerce une force élastique dans une direction axiale allant de la roue à aubes de rotor (1.1) vers la roue à aubes de stator (2.1) sur une bague extérieure (4.1) du premier roulement (4).
